# EUROPEAN PATENT SPECIFICATION

(11) **EP 1 430 865 B1**
(45) Date of publication and mention of the grant of the patent: **25.07.2007**
(21) Application number: 03078627.1
(22) Date of filing: 12.11.2003
(51) Int. Cl.: A61J 1/00, A61D 7/00, B05B 11/00, B65D 47/24, B65D 47/06, B65D 47/20

(54) **Dispenser device**
Spendevorrichtung
Dispositif de distribution

(30) Priority: 19.12.2002 IT RE20020038 U
(43) Date of publication of application: 23.06.2004
(73) Proprietor: Pibiplast S.r.l., 42020 Corregio (RE) (IT)
(72) Inventor: Bosi, Giovanni, . (IT)
(74) Representative: Corradini, Corrado

(56) References cited:
- EP-A- 0 875 465
- WO-A-83/03239
- US-A- 2 857 080
- US-A- 3 193 154
- US-A- 5 018 894

## Description

This patent relates to a dispenser device intended in particular for administering medicaments, particularly but not exclusively in the veterinary field.

Such medicaments are currently contained in bottles, and on administration are withdrawn by graduated syringes provided with means, such as flexible nozzles or the like, able to deliver the desired quantity of product into positions which are often difficult to reach or are delicate, such as the auricular channels.

US 3 193 154 discloses a dispenser in which a cap is screwed on a container that has at least one bellows like portion. The cap comprises a discharge tube and inside the cap there is a valve stem that in a closed position abuts on a terminal opening of the cap. The stem has also a snap stop apt to interface with a corresponding snap stop on the internal side of the cap. The cap is mounted on a squeeze bottle and when the bottle is squeezed the pressure transmitted to the fluid causes the upper end : of the discharge tube to lift off of the stem thereby exposing the terminal opening for discharge of the fluid.

The device of US 3 193 154 D1 does not allow an exactly dosed delivery of the fluid.

This invention concerns a particular dispenser device to be directly connected to the neck of the bottle and which is of simple low-cost construction and easy to use.

In accordance with the present invention, there is provided a dispenser device as defined in claim 1.

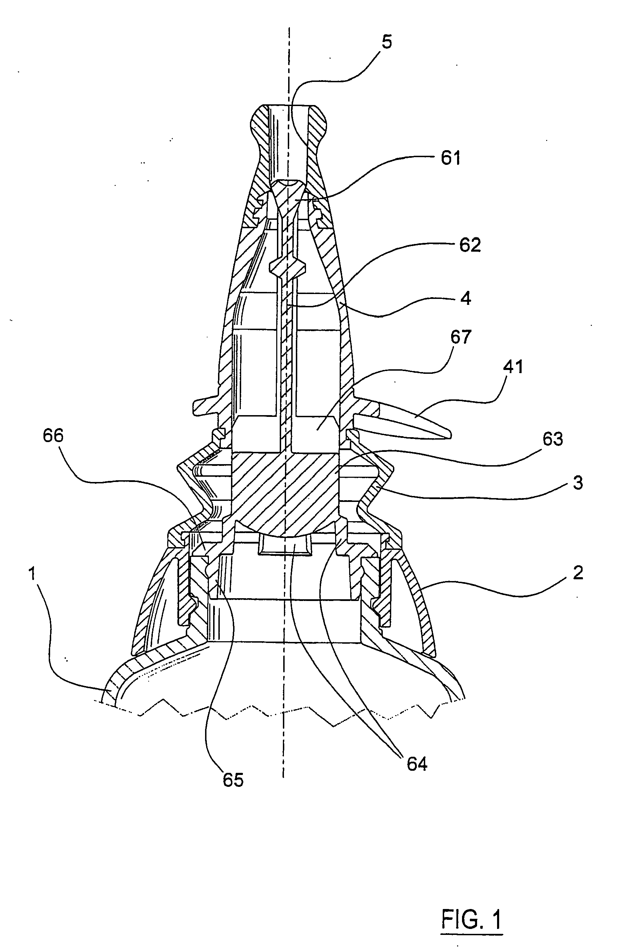

The constructional and operational characteristics of the invention will be apparent from the ensuing detailed description of a particular preferred embodiment thereof given with reference to the accompanying drawing.

The single figure of the drawing shows a section through the invention.

It comprises a bottle 1, of which only the top is shown, and on the neck of which an outer collar 2 is snap-fitted. The collar 2 could instead be screwed.

To the collar 2 there is securely fixed the base of a bellows 3 of elastomeric material, which carries at its top a hollow body 4 terminating with a nozzle 5.

The base of the body 4 is internally cylindrical, the body 4 presenting externally two projecting fins 41 the purpose of which will be apparent hereinafter.

The nozzle 5 is slightly flared outwards to sealedly receive a valving element 61.

Said valving element is positioned at the top of a rod 62 which extends from the centre of a cylindrical piston 63 provided lowerly with feet 64 which connect it to an inner collar 65.

Said piston becomes sealedly inserted into the hollow body on lowering said hollow body.

Above the piston 63, guide fins 67 are provided extending from the rod, and are inserted virtually as an exact fit into the upper part of the body 4.

Said inner collar 65 is provided with an upper abutment flange 66 and is sealedly inserted into the neck of the bottle 1.

Under closure conditions the upper edge of the piston 63 lies a short distance, in the axial direction, from the lower edge of the body 4 into which it can be sealedly inserted.

The body 4 has exactly the capacity of one dose of the product to be dispensed.

The invention operates in the following manner.

At each delivery the bottle has to be inverted to enable the product to descend by gravity and fill the interior of the body 4 by passing between the feet 64 and through the small gap existing between the upper edge of the piston 63 and the base of the hollow body 4. Having done this, the bottle is uprighted while a slight pressure is exerted on the body 4 via the fins 41, to the extent required to bring the upper edge of the piston 63 into contact with the lower edge of the hollow body 4, to prevent the product from returning to the bottle. At this point the nozzle 5 is inserted to make contact with the part into which the product is to be administered, then by acting on the fins 41 the bellows is deformed to completely insert the piston 63 into the body 4, and cause the flared head of the valving element 61 to rise within the flared seat of the nozzle 5.

The product is hence completely dispensed in the desired dose. During this stage any product contained in the interior of the bellows can return to the bottle by passing between the feet 64; for this purpose that end of the piston adjacent to the feet is preferably rounded downwards.

After dispensing, the fins 41 are released and the initial conditions are restored.

During this stage the nozzle 5 is subjected to a slight suction which prevents undesirable escape of droplets of any product not completely dispensed.

## Claims

1. A dispenser device for medicaments, to be connected to the neck of the bottle
(1) containing the medicament, comprising a hollow cylindrical body (4) which terminates with a nozzle (5) and is intended to be connected to the neck of the bottle
(1) by a deformable bellows (3), and a piston (63) guided for insertion into the hollow cylindrical body (4), the piston (63) being rigid with a valving element (61) arranged to close the nozzle (5) from the outside, deformation of the bellows (3) resulting in insertion of the piston (63) into the hollow body (4) and the opening of the nozzle (5) by the valving element (61),
**characterized by** said hollow body (4) has exactly the capacity of one dose of the product to be dispended and in that an outer collar (2) is fixed to the neck of the bottle (1) in order to fix said bellows (3).

2. A device as claimed in claim 1, **characterised by** comprising an inner collar (65) to be sealedly inserted into the neck of the bottle (1).

3. A device as claimed in claim 1, **characterised in that** the piston (63) is connected by feet to an inner collar (65) sealedly inserted into the neck of the bottle (1).

4. A device as claimed in claim 1, **characterised in that** the piston (63) is guided by fins (67) positioned between this latter and the valving element (61).

5. A device as claimed in claim 1, **characterised in that** the nozzle (5) presents an outwardly flared channel which sealedly receives the valving element (61).

6. A device as claimed in claim 1, **characterised in that** the hollow body (4) presents projecting external fins (41) for facilitating its operation.

## Patentansprüche

1. Medikamenten-Abgabevorrichtung, die am Flakonhals (1), in welchem das Arzneimittel enthalten, angebracht ist. Die Vorrichtung besteht aus einem zylinderförmigen Hohlkörper (4), an dessem Ende sich ein Schnabel (5) befindet; sie ist so konzipiert, damit sie am Flakonhals (1), mittels einen biegbaren Faltenbalgs (3) und eines gesteuerten Kolbens (63), der in den zylinderförmigen Hohlkörper (4) eingeführt wird, angebracht werden kann. Genannter Kolben (63) ist unbeweglich und hat ein Ventilelement (61) das so positioniert ist, um den Schnabel (5) von aussen zu schliessen, während das Verbiegen des Faltenbalges (3) das Einfügen des Kolbens (63) in den Hohlkörper (4) und die Öffnung des Schnabels (5) mittels des Ventilelements (61) bestimmt. Der bestehende Hohlkörper (4) stellt in der Tat genau die Kapazität der Dosis des abzugebenden Produkts dar. Dies auch, da der Bundring (2) der zur Befestigung des obengenanten Faltenbalges (3) am Flakonhals (1) angebracht ist.

2. Vorrichtung gemäß Patentanspruch 1, **gekennzeichnet durch** die Tatsache, dass diese einen inneren Bundring (65) besitzt, der dicht in den Flakonhals (1) einzufügen ist.

3. Vorrichtung gemäß Patentanspruch 1, **gekennzeichnet durch** die Tatsache, dass der Kolben (63) mittels Füßchen an einen inneren Bundring (65) angebracht ist, der dicht in den Flakonhals (1) eingefügt ist.

4. Vorrichtung gemäß Patentanspruch 1 **gekennzeichnet durch** die Tatsache, dass der Kolben (63) **durch** Klappen (67) gesteuert wird, die zwischen Letzterem und dem Ventilelement (61) positioniert sind.

5. Vorrichtung gemäß Patentanspruch 1 **gekennzeichnet durch** die Tatsache, dass der Schnabel (5) einen ausgeweiteten Kanal nach Außen hin aufweist, der das Ventilelement (61) aufnimmt.

6. Vorrichtung gemäß Patentanspruch 1, **gekennzeichnet durch** die Tatsache, dass der Hohlkörper (4) hervorstehende Aussen-Klappen (41) aufweist, welche die Funktion erleichtern.

## Revendications

1. Dispositif distributeur de médicaments à raccorder au goulot du flacon (1) contenant le médicament, comprenant un corps (4) cylindrique creux terminé par un bec (5) et conçu pour être raccordé au goulot du flacon (1) par l'intermédiaire d'un soufflet (3) souple et un piston (63) guidé pour l'introduction dans le corps (4) cylindre creux, ledit piston (63) est rigide avec un élément (61) à valve positionné de façon à fermer le bec (5) depuis l'extérieur, tandis que la déformation du soufflet (3) détermine l'introduction du piston (63) dans le corps (4) creux et l'ouverture du bec (5) par l'intermédiaire de l'élément (61) à valve,
**caractérisé par le fait que** le susdit corps (4) creux présente une capacité qui vaut exactement une dose du produit à distribuer et **par le fait que** le collier (2) est fixé au goulot du flacon (1) pour la fixation du soufflet précité (3).

2. Dispositif suivant la revendication 1, **caractérisé par le fait que** celui-ci comprend une bague (65) interne à introduire, pour étanchéité, dans le goulot du flacon (1).

3. Dispositif suivant la revendication 1, **caractérisé par le fait que** le piston (63) est fixé par broches à une bague (65) interne insérée pour étanchéité dans le goulot du flacon (1).

4. Dispositif suivant la revendication 1, **caractérisé par le fait que** le piston (63) est guidé par des ailettes (67) placées entre ce dernier et l'élément (61) à valve

5. Dispositif suivant la revendication 1, **caractérisé par le fait que** le bec (5) présente un canal évasé vers l'extérieur qui reçoit, étanche, l'élément (61) à valve.

6. Dispositif suivant la revendication 1, **caractérisé par le fait que** le corps (4) creux présente des ailettes (41) externes saillantes pour en faciliter le fonctionnement.
